# EUROPEAN PATENT APPLICATION

(11) **EP 4 138 407 A1**
(43) Date of publication of application: **22.02.2023**
(21) Application number: 22191192.8
(22) Date of filing: 19.08.2022
(51) Int. Cl.: H04R 1/10, H04R 5/033, H04R 25/00, H04W 4/80

(54) **STEREO RECEPTION OF AUDIO STREAMS IN SINGLE ENDPOINT WIRELESS SYSTEMS**

(30) Priority: 20.08.2021 US 202163260479 P
(71) Applicant: Starkey Laboratories, Inc., Eden Prairie, MN 55344 (US)
(72) Inventor: SOLUM, Jeffrey Paul, Eden Prairie, 55344 (US); BOTZ, Alexander, Eden Prairie, 55344 (US); JIDGE, Chaitanya, Eden Prairie, 55344 (US)
(74) Representative: Dentons UK and Middle East LLP

(57) **Abstract**

Disclosed herein, among other things, are systems and methods for obtaining stereo reception of an audio stream by multiple audio devices when only a single endpoint is the intended recipient. A system includes a first audio device and one or more second audio devices. The first audio device receives a first signal from a central device via a first wireless connection, transfers to the one or more second audio devices via a second wireless connection a second signal to enable the one or more second audio devices to eavesdrop on the first wireless connection, receives the incoming audio packet via the first wireless connection, and sends the incoming audio packet to the one or more second audio devices via the second wireless connection. The one or more second audio devices receives the incoming audio packet using the second wireless connection or by eavesdropping on the first wireless connection.

## Description

### TECHNICAL FIELD

This document relates generally to audio device systems and more particularly to methods for obtaining stereo reception of an audio stream by multiple audio devices when only a single endpoint is the intended recipient.

### BACKGROUND

Audio devices, or audio sinks, can be used to provide audible output to a user based on received wireless signals. Examples of audio devices include speakers and hearing devices, also referred to herein as hearing assistance devices or hearing instruments, including both prescriptive devices and non-prescriptive devices. Specific examples of hearing devices include, but are not limited to, hearing aids, headphones, and earbuds.

Hearing devices generally include the capability to receive audio streams from a variety of sources. For example, a hearing device may receive audio or data wirelessly from a transmitter or streamer of an assistive listening device (ALD) or smartphone. Audio information can be digitized, packetized and transferred as digital packets to and from the hearing devices for the purpose of streaming entertainment or other content. However, some wireless protocols include a designation of a single endpoint recipient which can make stereo reception of audio signals at multiple audio devices problematic.

Thus, there is a need in the art for improved systems and methods for receiving an audio stream for hearing devices.

### SUMMARY

Disclosed herein, among other things, are systems and methods for obtaining stereo reception of an audio stream by multiple audio devices when only a single endpoint is the intended recipient. A method includes receiving, at a first audio device of multiple audio devices, a first signal from a central device via a first wireless connection, the first signal indicative of an incoming audio packet. The method further includes transferring, from the first audio device to one or more second audio devices of the multiple audio devices via a second wireless connection, a second signal providing information to the one or more second audio devices to enable the one or more second audio devices to eavesdrop on the first wireless connection. The method also includes receiving, at the first audio device, the incoming audio packet via the first wireless connection, and sending, from the first audio device to the one or more second audio devices via the second wireless connection, the incoming audio packet one or more times. The method further includes receiving, at the one or more second audio devices, the incoming audio packet using one or more of the second wireless connection or eavesdropping on the first wireless connection. The method may include playing, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices.

Various aspects of the present subject matter include a system including a first audio device and one or more second audio devices. The first audio device includes one or more first processors programmed to receive a first signal from a central device via a first wireless connection, the first signal indicative of an incoming audio packet, transfer to the one or more second audio devices via a second wireless connection a second signal providing information to the one or more second audio devices to enable the one or more second audio devices to eavesdrop on the first wireless connection, receive the incoming audio packet via the first wireless connection, and send the incoming audio packet one or more times to the one or more second audio devices via the second wireless connection. The one or more second audio devices include one or more second processors programmed to receive the incoming audio packet using one or more of the second wireless connection or eavesdropping on the first wireless connection.

This Summary is an overview of some of the teachings of the present application and not intended to be an exclusive or exhaustive treatment of the present subject matter. Further details about the present subject matter are found in the detailed description and appended claims.

### BRIEF DESCRIPTION OF THE DRAWINGS

Various embodiments are illustrated by way of example in the figures of the accompanying drawings. Such embodiments are demonstrative and not intended to be exhaustive or exclusive embodiments of the present subject matter.
FIG. 1 illustrates a block diagram of a system for obtaining stereo reception of an audio stream by two audio devices when only a single endpoint is the intended recipient, according to various embodiments of the present subject matter.
FIG. 2 illustrates a block diagram of a system for obtaining stereo reception of an audio stream by multiple audio devices when only a single endpoint is the intended recipient, according to various embodiments of the present subject matter.
FIG. 3 illustrates a flow diagram of a method for obtaining stereo reception of an audio stream by two audio devices when only a single endpoint is the intended recipient, according to various embodiments of the present subject matter.
FIG. 4 illustrates a block diagram of an example machine upon which any one or more of the techniques discussed herein may perform.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment, including combinations of such embodiments. The following detailed description is demonstrative and not to be taken in a limiting sense. The scope of the present subject matter is defined by the appended claims, along with the full scope of legal equivalents to which such claims are entitled.

The present detailed description will discuss audio devices such as hearing devices and speakers. The description refers to hearing devices generally, which include earbuds, headsets, headphones and hearing assistance devices using the example of hearing aids. Other hearing devices include, but are not limited to, those in this document. It is understood that their use in the description is intended to demonstrate the present subject matter, but not in a limited or exclusive or exhaustive sense.

Hearing devices generally include the capability to receive audio streams from a variety of sources. For example, a hearing device may receive audio or data wirelessly from a transmitter or streamer of an assistive listening device (ALD) or smartphone. Audio information can be digitized, packetized and transferred as digital packets to and from the hearing devices for the purpose of streaming entertainment or other content. However, some wireless protocols include a designation of a single endpoint recipient which can make stereo reception of audio signals at multiple audio devices problematic. Previous attempted solutions to this problem include using acknowledgments between recipient devices prior to sending an acknowledgment to a central source device. However, these previous attempts requires multiple radio systems instead of a single radio system being used in a time division multiplexing solution. In addition, the previous attempts rely upon strict timing requirements via a proprietary protocol to ensure acknowledgments are received in a timely manner.

The present subject matter provides systems and methods for obtaining stereo reception of an audio stream by two or more audio devices or sinks (such as speakers, hearing devices or hearing aids) when only a single endpoint is the intended recipient. The present subject matter provides for use of standard communication protocols to accomplish the task of true wireless connections to multiple audio devices in single endpoint networks. In addition, the present subject matter ensures that packets are received by multiple audio devices without the aforementioned timing requirements, and provides for a greater number of network connections and associated advertisements.

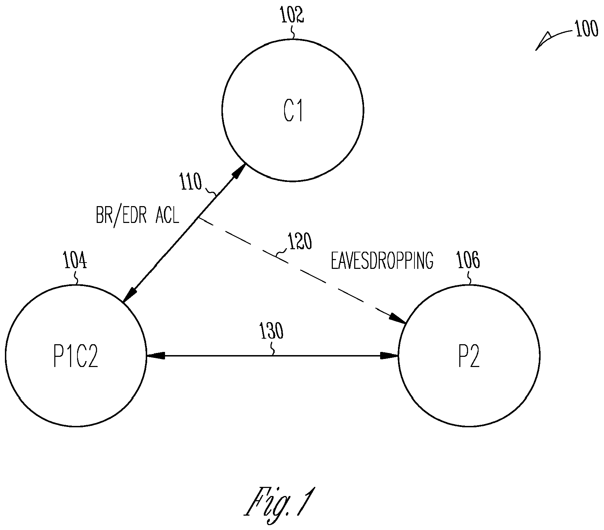

FIG. 1 illustrates a block diagram of a system 100 for obtaining stereo reception of an audio stream by two audio devices when only a single endpoint is the intended recipient, according to various embodiments of the present subject matter. The system includes a first audio device 104 and one or more second audio devices 106. The first audio device 104 includes one or more first processors programmed to receive a first signal from a central device 102 (or source device) via a first wireless connection 110, the first signal indicative of an incoming audio packet. The first audio device 104 transfers to the one or more second audio devices 106 via a second wireless connection 130 a second signal providing information to the one or more second audio devices 106 to enable the one or more second audio devices 106 to eavesdrop 120 on the first wireless connection 110. The first audio device 104 receives the incoming audio packet via the first wireless connection 110, and sends the incoming audio packet one or more times to the one or more second audio devices 106 via the second wireless connection 130. The one or more second audio devices 106 include one or more second processors programmed to receive the incoming audio packet using one or more of the second wireless connection 130 or eavesdropping 120 on the first wireless connection 110.

The audio devices may include hearing devices, such as hearing aids. Additionally or alternatively, a hearing device 104 (P1C2) acts as peripheral to a central device 102 (C1) via a first connection 110, such as a basic rate/enhanced data rate (BR/EDR) asynchronous connection-oriented (ACL) connection. The central device 102 is an audio source, such as a smartphone or media player in a Bluetooth piconet configuration, in various examples. The hearing device 104 (P1C2) is also configured to act as a central device to a second hearing device 106 (P2) via a second connection 130, such as a Low Energy asynchronous connection-oriented (LE ACL) connection.

The central device C1 in a Classic Bluetooth (BR/EDR) piconet connection 110 may at any time start an advanced audio distribution profile (A2DP) session with a peripheral device P1C2 (audio device 104). The session may start when audio such as music is played or audio for a video is to be rendered, in various examples. Additionally or alternatively, the audio device 104 transfers link keys, session keys, an identity address, a Bluetooth clock, and a channel map to the second audio device 106 over the second connection 130, such as an LE ACL connection. The channel map is used for a channel hopping system, in various examples. After receiving this information, the second audio device 106 may receive (eavesdrop on) the audio link (first connection 110) between the central device 102 and the first audio device 104 engaged in an audio session, the audio session using, for example, an audio/video distribution transport protocol (AVDTP) over a BR/EDR ACL connection.

The second audio device (P2) 106 does not have guaranteed delivery of audio packets from eavesdropping on the BR/EDR ACL connection. As a precaution to ensure a reliable link for the second audio device (P2) 106, an isochronous channel (second connection 130) is set up between the first audio device (P1C2) 104 and the second audio device (P2) device 106, in an example. Additionally or alternatively, the first audio device (P1C2) 104 sends a copy of the audio packet received from the central device (C1) 102 one or more times to the second audio device (P2) 106 over the second connection 130, such as an LE-S (LE isochronous stream) and/or an LE-ACL connection. Other types of isochronous connections may be used without departing from the scope of the present subject matter. In this manner, the first audio device (P1C2) obtains as many attempts as needed before timing out to receive the audio packet from the central device (C1) 102. In addition, the second audio device (P2) device 106 may receive the audio packet by eavesdropping 120 on the central device (C1) 102 to first audio device (P1C2) 104 connection 110 and still other opportunities via the first audio device (P1C2) 104 to second audio device (P2) 106 second connection 130. The second connection may include both an LE-S connection and an LE-ACL connection.

Additionally or alternatively, for audio to be rendered synchronously to a user from the first audio device 104 and the second audio device 106 (such as left and right hearing aids), a delay may be used by one of the first and second audio devices prior to rendering the audio. The delay may include a presentation delay and a transport delay. Additionally or alternatively, the presentation delay includes a decoding delay, a buffer delay and/or a signal processing delay. For example, the first audio device 104 may delay the playing of audio to account for a transport delay of an isochronous channel (second connection 130) between the first audio device 104 and the second audio device 106, and to account for a presentation delay of the second audio device 106. In one example, these delays are accounted for in the standard for LE isochronous channels described in core Bluetooth 5.2, for example.

Additionally or alternatively, the A2DP connection maintains a buffer of audio packets to ensure quality of service. The first audio device 104 and the second audio device 106 each include a buffer of audio frames and perform a handshake when the audio stream begins to ensure playback of the same audio frame at the substantially the same time, in various examples. The handshake between the first audio device 104 and the second audio device 106 is performed each time an audio buffer is depleted, and/or each time a one of the devices is power cycled, in various examples. Additionally or alternatively, the second audio device 106 is programmed to arbitrate which audio packets, either received directly from the first audio device 104 or received by eavesdropping on the connection between the first audio device 104 and the central device 102, is stored in the audio buffer of the second audio device 106. Additionally or alternatively, the second audio device 106 uses sequence numbers to track received audio packets. In various examples, the second audio device 106 uses timestamps to track received audio packets. Additionally or alternatively, the first audio device 104 can track lost audio packets by recording a number of lost audio frames based on an A2DP protocol, for example, to ensure reception of the lost audio packets by the second audio device 106.

Various examples include using a near-field magnetic induction (NFMI) link for the second connection 130 between the first audio device 104 and the second audio device 106. Other types of connections, such as 2.4 GHz radio connections, can be used for the second connection 130 without departing from the scope of the present subject matter. In one example, the first audio device 104 sends a copy of the audio packet received from the central device 102 one or more times to the second audio device 106 over an NFMI connection. Additionally or alternatively, the second audio device 106 may skip listening to the second connection 130 if it is successful eavesdropping 120 on the first connection 110. Additionally or alternatively, the first audio device 104 and the second audio device 106 may switch roles with respect to which device is maintaining the first connection 110 with the central device 102 and which device is eavesdropping, either to balance power consumption between the devices or to improve link margin for the connections.

The second connection 130 may be programmed to allow for retransmissions as necessary to ensure a quality link between the first audio device 104 and the second audio device 106. For example, if the second connection 130 is an LE-S link, the symbol rate can be change between 2 Mbps, 1 Mbps or one of the other allowed LE long range physical layers (PHYs) for balancing reliability, power consumption and bandwidth. Additionally or alternatively, both the first audio device 104 and the second audio device 106 may be equipped with dual mode Bluetooth transceivers capable of both Classic and LE modes of operation.

According to various examples, the second connection 130 (for example, an LE ACL connection) can be used to forward Link Management Protocol (LMP) and logical link control and adaptation protocol (L2CAP) packets received by the first audio device 104 and the second audio device 106. Additionally or alternatively, the first audio device 104 maintains the BR/EDR ACL connection, and has guaranteed delivery of ACL packets. In this example, the second audio device 106 will be eavesdropping for these packets, so delivery of the ACL packets is not guaranteed. In this example, the second connection 130 includes an LE ACL connection to ensure delivery to the second audio device 106 of all LMP and L2CAP packets as long as the connections are maintained. LMP and L2CAP messages received from the LE ACL connection can be routed to either the Host Application or Controller running on the second audio device 106 to maintain the connection state in synchronization with the first audio device 104.

In various examples, since the same LMP or L2CAP message can be received by the second audio device 106, either through the LE ACL connection 130 or by eavesdropping 120, a mechanism to detect duplicate message reception is used. Additionally or alternatively, the second audio device 106 maintains a record of each LMP or L2CAP packet received over the BR/EDR ACL connection 110. In this example, each record is time-stamped using the Bluetooth clock. When the same messages/packets are forwarded by the first audio device 104 over the LE ACL connection 130, these messages/packets also include a timestamp based on a local Bluetooth clock. In various examples, the timestamp is recorded by the second audio device 106 at the time of reception. Since the Bluetooth clock on the first audio device 104 and the second audio device 106 are synchronized by the BR/EDR ACL connection, duplicate packets can be detected by the second audio device 106 based on the timestamp and message type. The timestamp may also be used by the second audio device 106 to compensate for the transport delay over the LE ACL connection 130 if the LMP or L2CAP procedure is time critical. For example, the first audio device 104 may delay the response to central device 102 for messages until the second audio device 106 has acknowledged reception of the messages over the LE ACL connection 130. This procedure may avoid race conditions the second audio device 106 fails to receive messages over the eavesdropping path, resulting in the messages being processed in the incorrect order. The second audio device 106 may also wait to process time-critical messages until the same messages are also received over the LE ACL connection 130. Additionally or alternatively, processing may include decoding the audio encoded within a packet or audio frame. In this manner, both the first audio device 104 and the second audio device 106 can be assured to receive the message prior to rendering the audio contained in the packet.

Additionally or alternatively, the LE ACL connection 130 can also be used to communicate an irreparable loss of synchronization in the connection state of the BR/EDR connections between the first audio device 104 and the second audio device 106. In one example, the central device 102 may be forced to resend all LMP and L2CAP messages to re-establish protocol connections between all stack layers (LMP, L2CAP, profile layers, etc.). The first audio device 104 may disconnect the BR/EDR ACL connection and perform establishment procedures, in various examples. The first audio device 104 may then transfer the link keys, session keys, an identity address, a Bluetooth clock, and a channel map to the second audio device 106 to re-synchronize the LMP connection and restart eavesdropping/forwarding of L2CAP and LMP messages. Additionally or alternatively, this method may also be used to restore system state if the second audio device 106 is power cycled, or if the LE ACL connection to the first audio device 104 is lost.

The LE-S connection 130 may be a Unicast isochronous connection in which the Unicast recipient can acknowledge the transmitted packet. Additionally or alternatively, the LE-S connection 130 may be a Broadcast isochronous connection in which the recipient has no way to acknowledge the receipt of a transmitted packet, in which case unconditional retransmissions may be used by the transmitter of the first audio device 104.

The present subject matter provides a method of obtaining stereo reception of an audio stream by two audio devices (or sinks) when only a single endpoint is the intended recipient, via eavesdropping and through the use of a Bluetooth low energy isochronous connection between audio sinks to ensure reception. Additionally or alternatively, the role of the peripheral to the central device can be changed for the purpose of balancing power. Additionally or alternatively, the role of the peripheral to the central device can be changed for the purpose of improving link quality.

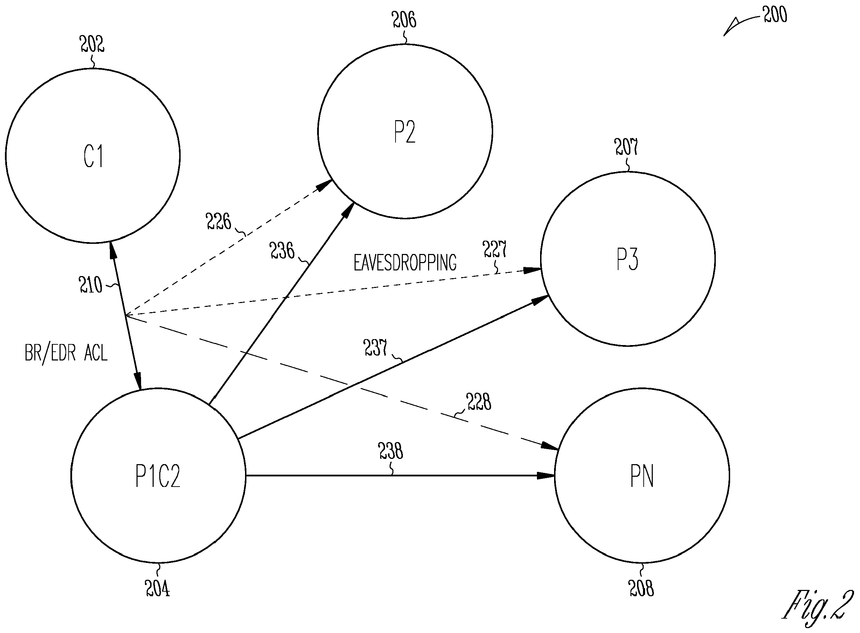

FIG. 2 illustrates a block diagram of a system 200 for obtaining stereo reception of an audio stream by multiple audio devices when only a single endpoint is the intended recipient, according to various embodiments of the present subject matter. The system includes a first audio device 204 and one or more second audio devices 206, 207, 208. The first audio device 204 includes one or more first processors programmed to receive a first signal from a central device 202 (or source device) via a first wireless connection 210, the first signal indicative of an incoming audio packet. The first audio device 204 transfers to the one or more second audio devices 206, 207, 208 via second wireless connections 236, 237, 238 a second signal providing information to the one or more second audio devices 206, 207, 208 to enable the one or more second audio devices 206, 207, 208 to eavesdrop 226, 227, 228 on the first wireless connection 210. The first audio device 204 receives the incoming audio packet via the first wireless connection 210, and sends the incoming audio packet one or more times to the one or more second audio devices 206, 207, 208 via the second wireless connections 236, 237, 238. The one or more second audio devices 206, 207, 208 include one or more second processors programmed to receive the incoming audio packet using one or more of the second wireless connections 236, 237, 238 or by eavesdropping 226, 227, 228 on the first wireless connection 210. While three second audio devices 206, 207, 208 are depicted, any number of second audio devices may be used without departing from the scope of the present subject matter.

In various examples, the one or more second audio devices 206, 207, 208 (or multiple peripheral devices) may or may not be capable of receiving the primary communication between the central device 202 and the first audio device 204. However, the one or more second audio devices 206, 207, 208 are capable of receiving either a unicast or broadcast transmission from the first audio device 204. In this example, the first audio device 204 may transmit the relevant channel to each peripheral. For example, the first audio device 204 may transmit left front information to a left front speaker, or right front information to a right front speaker.

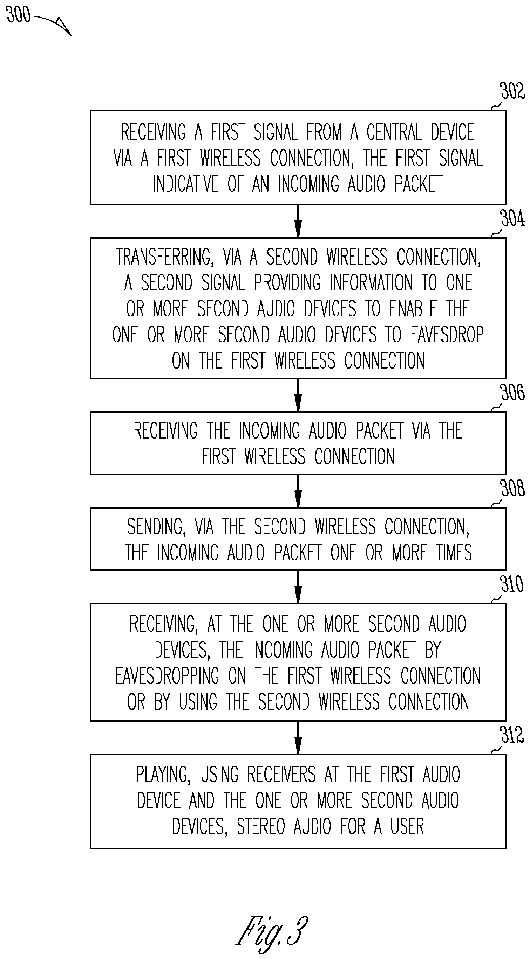

FIG. 3 illustrates a flow diagram of a method 300 for obtaining stereo reception of an audio stream by two audio devices when only a single endpoint is the intended recipient, according to various embodiments of the present subject matter. The method 300 includes receiving, at a first audio device of multiple audio devices, a first signal from a central device via a first wireless connection, the first signal indicative of an incoming audio packet, at step 302. The method further includes transferring, from the first audio device to one or more second audio devices of the multiple audio devices via a second wireless connection, a second signal providing information to the one or more second audio devices to enable the one or more second audio devices to eavesdrop on the first wireless connection, at step 304. The method also includes, at step 306 receiving, at the first audio device, the incoming audio packet via the first wireless connection, and sending, from the first audio device to the one or more second audio devices via the second wireless connection, the incoming audio packet one or more times, at step 308. The method further includes receiving, at the one or more second audio devices, the incoming audio packet by eavesdropping on the first wireless connection or by using the second wireless connection (e.g., if eavesdropping is unsuccessful), at step 310. Various examples of the method include playing, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices, at step 312.

According to various examples, the first wireless connection includes a Bluetooth^{®} connection. Additionally or alternatively, the second wireless connection includes a Bluetooth^{®} Low Energy (BLE) connection, such as a BLE asynchronous connection-oriented (LE ACL) connection and/or a BLE isochronous stream (LE-S) connection, in various examples. Additionally or alternatively, the second wireless connection includes a near-field magnetic induction (NFMI) connection. The second signal includes link keys, session keys, an identity address, a wireless clock and a channel map, or some combination of one or more of the link keys, session keys, an identity address, a wireless clock and a channel map, in various examples. Additionally or alternatively, the one or more second audio devices are configured to automatically function as the first audio device to improve link quality of the first wireless connection to the central device. Additionally or alternatively, the one or more second audio devices are configured to automatically function as the first audio device to balance power consumption between the first audio device and the one or more second audio devices. The first signal includes an advance audio distribution profile (A2DP) transmission, in an example, including an audio/video distribution transport protocol (AVDTP).

Various aspects of the present subject matter include a system including a first audio device and one or more second audio devices. The first audio device includes one or more first processors programmed to receive a first signal from a central device via a first wireless connection, the first signal indicative of an incoming audio packet, transfer to the one or more second audio devices via a second wireless connection a second signal providing information to the one or more second audio devices to enable the one or more second audio devices to eavesdrop on the first wireless connection, receive the incoming audio packet via the first wireless connection, and send the incoming audio packet one or more times to the one or more second audio devices via the second wireless connection. The one or more second audio devices include one or more second processors programmed to receive the incoming audio packet using one or more of the second wireless connection or eavesdropping on the first wireless connection.

According to various examples, the one or more first processors and the one or more second processors are programmed to play, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices. Additionally or alternatively, the first audio device and the one or more second audio devices include one or more buffers of audio frames. The one or more first processors and the one or more second processors are programmed to perform a handshake to ensure stereo audio playback includes a same audio frame, in an example. The one or more first processors and the one or more second processors are programmed to perform the handshake upon depletion of the one or more buffers, in an example. The one or more first processors and the one or more second processors are programmed to perform the handshake upon power cycling of the first audio device or the one or more second audio devices, in an example. Additionally or alternatively, one or more second processors are programmed to stop monitoring the second wireless connection if successfully eavesdropping on the first wireless connection. Additionally or alternatively, in some embodiments, the first audio device or the one or more second audio devices include a hearing assistance device, such as a hearing aid.

The present subject matter provide for improved reception of audio packets by multiple audio devices, by using eavesdropping on a single endpoint wireless connection together with relaying of the audio packets to provide redundancy and ensure proper reception by audio devices that are not engaged in the single endpoint wireless connection.

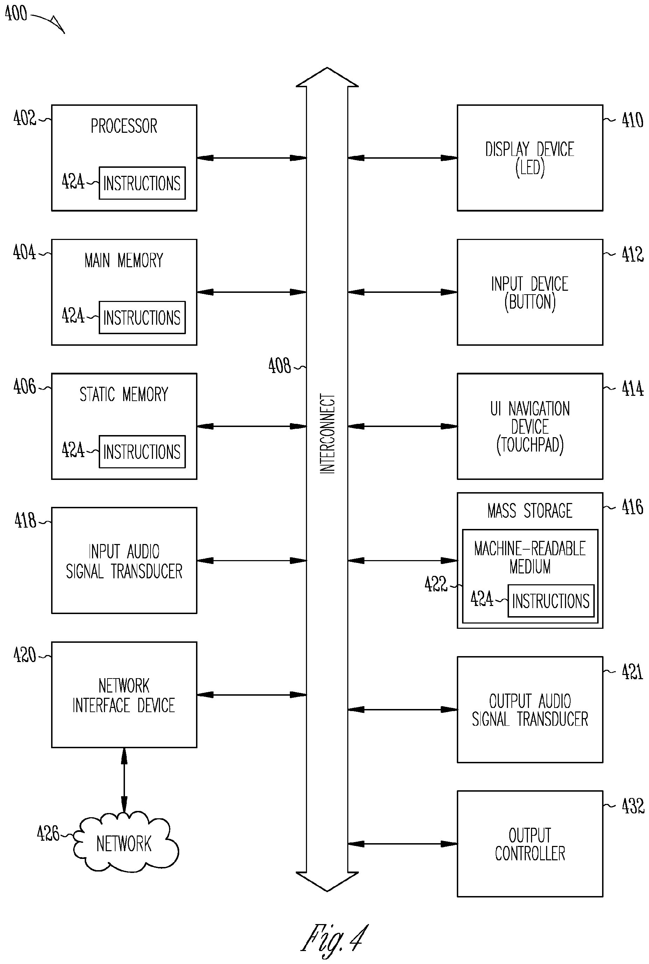

FIG. 4 illustrates a block diagram of an example machine 400 upon which any one or more of the techniques (e.g., methodologies) discussed herein may perform. In alternative examples, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a storage device (e.g., drive unit) 416, one or more input audio signal transducers 418 (e.g., microphone), a network interface device 420, and one or more output audio signal transducer 421 (e.g., speaker). The machine 400 may include an output controller 432, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 may constitute machine readable media.

While the machine readable medium 422 is illustrated as a single medium, the term "machine readable medium" may include a single medium or multiple media (e.g., a centralized or distributed database, and/or associated caches and servers) configured to store the one or more instructions 424.

The term "machine readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Non-limiting machine-readable medium examples may include solid-state memories, and optical and magnetic media. In an example, a massed machine-readable medium comprises a machine-readable medium with a plurality of particles having invariant (e.g., rest) mass. Accordingly, massed machine-readable media are not transitory propagating signals. Specific examples of massed machine-readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to communicate wirelessly using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400, and includes digital or analog communications signals or other intangible medium to facilitate communication of such software.

Various examples of the present subject matter support wireless communications with a hearing device. In various examples the wireless communications may include standard or nonstandard communications. Some examples of standard wireless communications include link protocols including, but not limited to, Bluetooth^{™}, Bluetooth^{™} Low Energy (BLE), IEEE 802.11(wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications while others support NFMI. Although the present system is demonstrated as a radio system, it is possible that other forms of wireless communications may be used such as ultrasonic, optical, infrared, and others. It is understood that the standards which may be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, SPI, PCM, ATM, Fibre-channel, Firewire or 1394, InfiniBand, or a native streaming interface. In various examples, such connections include all past and present link protocols. It is also contemplated that future versions of these protocols and new future standards may be employed without departing from the scope of the present subject matter.

Hearing assistance devices typically include at least one enclosure or housing, a microphone, hearing assistance device electronics including processing electronics, and a speaker or "receiver." Hearing assistance devices may include a power source, such as a battery. In various examples, the battery is rechargeable. In various examples multiple energy sources are employed. It is understood that in various examples the microphone is optional. It is understood that in various examples the receiver is optional. It is understood that variations in communications protocols, antenna configurations, and combinations of components may be employed without departing from the scope of the present subject matter. Antenna configurations may vary and may be included within an enclosure for the electronics or be external to an enclosure for the electronics. Thus, the examples set forth herein are intended to be demonstrative and not a limiting or exhaustive depiction of variations.

It is understood that digital hearing assistance devices include a processor. In digital hearing assistance devices with a processor, programmable gains may be employed to adjust the hearing assistance device output to a wearer's particular hearing impairment. The processor may be a digital signal processor (DSP), microprocessor, microcontroller, other digital logic, or combinations thereof. The processing may be done by a single processor, or may be distributed over different devices. The processing of signals referenced in this application may be performed using the processor or over different devices. Processing may be done in the digital domain, the analog domain, or combinations thereof. Processing may be done using subband processing techniques. Processing may be done using frequency domain or time domain approaches. Some processing may involve both frequency and time domain aspects. For brevity, in some examples drawings may omit certain blocks that perform frequency synthesis, frequency analysis, analog-to-digital conversion, digital-to-analog conversion, amplification, buffering, and certain types of filtering and processing. In various examples of the present subject matter the processor is adapted to perform instructions stored in one or more memories, which may or may not be explicitly shown. Various types of memory may be used, including volatile and nonvolatile forms of memory. In various examples, the processor or other processing devices execute instructions to perform a number of signal processing tasks. Such embodiments may include analog components in communication with the processor to perform signal processing tasks, such as sound reception by a microphone, or playing of sound using a receiver (i.e., in applications where such transducers are used). In various examples of the present subject matter, different realizations of the block diagrams, circuits, and processes set forth herein may be created by one of skill in the art without departing from the scope of the present subject matter.

It is further understood that different hearing devices may embody the present subject matter without departing from the scope of the present disclosure. The devices depicted in the figures are intended to demonstrate the subject matter, but not necessarily in a limited, exhaustive, or exclusive sense. It is also understood that the present subject matter may be used with a device designed for use in the right ear or the left ear or both ears of the wearer.

The present subject matter is demonstrated for hearing devices, including hearing assistance devices, including but not limited to, behind-the-ear (BTE), in-the-ear (ITE), in-the-canal (ITC), receiver-in-canal (RIC), invisible-in-canal (IIC) or completely-in-the-canal (CIC) type hearing assistance devices. It is understood that behind-the-ear type hearing assistance devices may include devices that reside substantially behind the ear or over the ear. Such devices may include hearing assistance devices with receivers associated with the electronics portion of the behind-the-ear device, or hearing assistance devices of the type having receivers in the ear canal of the user, including but not limited to receiver-in-canal (RIC) or receiver-in-the-ear (RITE) designs. The present subject matter may also be used in hearing assistance devices generally, such as cochlear implant type hearing devices. The present subject matter may also be used in deep insertion devices having a transducer, such as a receiver or microphone. The present subject matter may be used in bone conduction hearing devices, in some examples. The present subject matter may be used in devices whether such devices are standard or custom fit and whether they provide an open or an occlusive design. It is understood that other hearing devices not expressly stated herein may be used in conjunction with the present subject matter.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

The description can be described further with respect to the following consistory clauses:
1. A method, comprising:
   receiving, at a first audio device of multiple audio devices, a first signal from a central device via a first wireless connection, the first signal indicative of an incoming audio packet;
   transferring, from the first audio device to one or more second audio devices of the multiple audio devices via a second wireless connection, a second signal providing information to the one or more second audio devices to enable the one or more second audio devices to eavesdrop on the first wireless connection;
   receiving, at the first audio device, the incoming audio packet via the first wireless connection;
   sending, from the first audio device to the one or more second audio devices via the second wireless connection, the incoming audio packet one or more times;
   receiving, at the one or more second audio devices, the incoming audio packet using one or more of the second wireless connection or eavesdropping on the first wireless connection; and
   playing, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices.
2. The method of clause 1, wherein the first wireless connection includes a Bluetooth^{®} connection.
3. The method of clause 1, wherein the second wireless connection includes a Bluetooth^{®} Low Energy (BLE) connection.
4. The method of clause 3, wherein the BLE connection includes a BLE asynchronous connection-oriented (LE ACL) connection.
5. The method of clause 3, wherein the BLE connection includes a BLE isochronous stream (LE-S) connection.
6. The method of clause 1, wherein the second wireless connection includes a near-field magnetic induction (NFMI) connection.
7. The method of clause 1, wherein the second signal includes link keys, session keys, an identity address, a wireless clock and a channel map.
8. The method of clause 1, wherein the one or more second audio devices are configured to automatically function as the first audio device to improve link quality of the first wireless connection to the central device.
9. The method of clause 1, wherein the one or more second audio devices are configured to automatically function as the first audio device to balance power consumption between the first audio device and the one or more second audio devices.
10. The method of clause 1, wherein the first signal includes an advance audio distribution profile (A2DP) transmission.
11. The method of clause 10, wherein the A2DP transmission includes an audio/video distribution transport protocol (AVDTP).
12. A system, comprising:
   a first audio device; and
   one or more second audio devices,
   wherein the first audio device includes one or more first processors programmed to:
      receive a first signal from a central device via a first wireless connection, the first signal indicative of an incoming audio packet;
      transfer to the one or more second audio devices via a second wireless connection a second signal providing information to the one or more second audio devices to enable the one or more second audio devices to eavesdrop on the first wireless connection;
      receive the incoming audio packet via the first wireless connection; and
      send the incoming audio packet one or more times to the one or more second audio devices via the second wireless connection, and
   wherein the one or more second audio devices include one or more second processors programmed to:
      receive the incoming audio packet using one or more of the second wireless connection or eavesdropping on the first wireless connection.
13. The system of clause 12, wherein the one or more first processors and the one or more second processors are programmed to:
   play, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices.
14. The system of clause 13, wherein the first audio device and the one or more second audio devices include one or more buffers of audio frames.
15. The system of clause 13, wherein the one or more first processors and the one or more second processors are programmed to perform a handshake to ensure stereo audio playback includes a same audio frame.
16. The system of clause 15, wherein the one or more first processors and the one or more second processors are programmed to perform the handshake upon depletion of the one or more buffers.
17. The system of clause 15, wherein the one or more first processors and the one or more second processors are programmed to perform the handshake upon power cycling of the first audio device or the one or more second audio devices.
18. The system of clause 12, wherein the one or more second processors are programmed to stop monitoring the second wireless connection if successfully eavesdropping on the first wireless connection.
19. The system of clause 12, wherein the first audio device or the one or more second audio devices include a hearing assistance device.
20. The system of clause 19, wherein the hearing assistance device includes a hearing aid.

## Claims

1. A method, comprising:
receiving, at a first audio device of multiple audio devices, a first signal from a central device via a first wireless connection, the first signal indicative of an incoming audio packet;
transferring, from the first audio device to one or more second audio devices of the multiple audio devices via a second wireless connection, a second signal providing information to the one or more second audio devices to enable the one or more second audio devices to eavesdrop on the first wireless connection;
receiving, at the first audio device, the incoming audio packet via the first wireless connection;
sending, from the first audio device to the one or more second audio devices via the second wireless connection, the incoming audio packet one or more times;
receiving, at the one or more second audio devices, the incoming audio packet using one or more of the second wireless connection or eavesdropping on the first wireless connection; and
playing, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices.

2. The method of claim 1, wherein the first wireless connection includes a Bluetooth^{®} connection.

3. The method of claim 1 or 2, wherein the second wireless connection includes a Bluetooth^{®} Low Energy (BLE) connection, wherein the BLE connection optionally includes a BLE asynchronous connection-oriented (LE ACL) connection, and/or a BLE isochronous stream connection.

4. The method of any preceding claim, wherein the second wireless connection includes a near-field magnetic induction (NFMI) connection.

5. The method of any preceding claim, wherein the second signal includes link keys, session keys, an identity address, a wireless clock and a channel map.

6. The method of any preceding claim, wherein the one or more second audio devices are configured to automatically function as the first audio device to improve link quality of the first wireless connection to the central device.

7. The method of any preceding claim, wherein the one or more second audio devices are configured to automatically function as the first audio device to balance power consumption between the first audio device and the one or more second audio devices.

8. The method of any preceding claim, wherein the first signal includes an advance audio distribution profile (A2DP) transmission, wherein the A2DP transmission optionally includes an audio/video distribution transport protocol (AVDTP).

9. A system, comprising:
a first audio device; and
one or more second audio devices,
wherein the first audio device includes one or more first processors programmed to:
receive a first signal from a central device via a first wireless connection, the first signal indicative of an incoming audio packet;
transfer to the one or more second audio devices via a second wireless connection a second signal providing information to the one or more second audio devices to enable the one or more second audio devices to eavesdrop on the first wireless connection;
receive the incoming audio packet via the first wireless connection; and
send the incoming audio packet one or more times to the one or more second audio devices via the second wireless connection, and
wherein the one or more second audio devices include one or more second processors programmed to:
receive the incoming audio packet using one or more of the second wireless connection or eavesdropping on the first wireless connection.

10. The system of claim 6, wherein the one or more first processors and the one or more second processors are programmed to:
play, using receivers at the first audio device and the one or more second audio devices, stereo audio for a user of the first audio device and the one or more second audio devices, including using a delay at the first audio device, the delay including a transport delay of the second wireless connection and a presentation delay of the one or more second audio devices.

11. The system of claim 10, wherein the first audio device and the one or more second audio devices include one or more buffers of audio frames.

12. The system of claim 11, wherein the one or more first processors and the one or more second processors are programmed to perform a handshake to ensure stereo audio playback includes a same audio frame.

13. The system of claim 12, wherein the one or more first processors and the one or more second processors are programmed to perform the handshake upon depletion of the one or more buffers and/or wherein the one or more first processors and the one or more second processors are programmed to perform the handshake upon power cycling of the first audio device or the one or more second audio devices.

14. The system of any of claims 9 to 13, wherein the one or more second processors are programmed to stop monitoring the second wireless connection if successfully eavesdropping on the first wireless connection.

15. The system of any of claims 9 to 14, wherein the first audio device or the one or more second audio devices include a hearing assistance device, wherein the hearing assistance device optionally includes a hearing aid.
